(19) Europäisches Patentamt
European Patent Office
Office européen des brevets

(11) Veröffentlichungsnummer: **0 276 726 B1**

(12) **EUROPÄISCHE PATENTSCHRIFT**

(45) Veröffentlichungstag der Patentschrift: **15.11.95**

(51) Int. Cl.[6]: **C08G 18/10**, C08G 18/79, C08K 3/00, C08K 13/00

(21) Anmeldenummer: **88100701.7**

(22) Anmeldetag: **19.01.88**

(54) **Formmasse und deren Verwendung.**

(30) Priorität: **27.01.87 DE 3702667**

(43) Veröffentlichungstag der Anmeldung:
**03.08.88 Patentblatt 88/31**

(45) Bekanntmachung des Hinweises auf die Patenterteilung:
**15.11.95 Patentblatt 95/46**

(84) Benannte Vertragsstaaten:
**AT BE CH DE ES FR GB GR IT LI LU NL SE**

(56) Entgegenhaltungen:
**EP-A- 0 237 890**
**FR-A- 2 385 657**

(73) Patentinhaber: **Mankiewicz Gebr. & Co. (GmbH & Co. KG)**
**Georg-Wilhelm-Strasse 189**
**D-21107 Hamburg (DE)**

(72) Erfinder: **Schubert, Bernd, Dr.**
**Fürstenbergstrasse 17**
**D-5090 Leverkusen 3 (DE)**
Erfinder: **Rohardt, Klaus**
**Eichendorffstrasse 18**
**D-2085 Ouickborn (DE)**
Erfinder: **Grau, Michael O.**
**Bernadottestrasse 277**
**D-2000 Hamburg 52 (DE)**

(74) Vertreter: **UEXKÜLL & STOLBERG Patentanwälte**
**Beselerstrasse 4**
**D-22607 Hamburg (DE)**

**EP 0 276 726 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

## Beschreibung

Die Erfindung betrifft eine neue Formmasse auf Basis von Polyisocyanato-Isocyanuraten, Polyolen und Flamm- und Brandschutzmitteln sowie ggf. Polyisocyanaten, Füllstoffen und Beschleunigern, welche sich besonders gut zur Verwendung als Konstruktions- und Reparaturwerkstoff eignet und insbesondere unter den Gesichtpunkten der schnellen Verarbeitbarkeit und des Brandschutzes zu hervorragenden Produkten führt.

Bekannt sind duroplastische Formassen und Schäume aus Polyurethan mit Isocyanat- und Isocyanurat-Komponenten, Epoxidharzen (EPO-Harzen), Phenolharzen und Novolaken, die flammhemmende Zusätze enthalten und als schwer- oder nichtentflammbare Stoffe gelten. Um die Feuerbeständigkeit zu verbessern und eine niedrige Rauchgasdichte und -toxizität zu erreichen, sind eine große Zahl von Formulierungen vorgeschlagen worden. Als flammhemmende Zusätze werden u.a. $Al_2O_3$ x $H_2O$, anorganische und organische Phosphate bzw. Phosphonate, Borate, Silikate, Chlorparaffine, Halogenverbindungen, Schwermetallsalze, elementarer Phosphor, Polyphosphate und Antimontrioxid empfohlen. Es sei in diesem Zusammenhang beispielhaft auf die US-PS 4 126 473, EP-PS 69 975, US-PS 4 147 690 und DE-OS 31 05 947 verwiesen. Eine Übersicht über den Stand der Technik findet sich in Becker-Braun, Kunststoffhandbuch, Band 7, Polyurethane, 2. Auflage, 1983, Hanser-Verlag, J. Troitzsch, Brandverhalten von Kunststoffen, Grundlagen etc., Carl Hanser-Verlag, 1982 und Polymerwerkstoffe, Band 2, Technologie 1, H. Batzer et al., Georg Thieme Verlag, Stuttgart, 1984.

Mit Einzelzugaben oder Kombinationen derartiger flammhemmender Zusätze wurden zum Teil recht befriedigende Ergebnisse erzielt. Angesichts der stark zunehmenden Anwendung von Kunststoffen werden heutzutage jedoch insbesondere im Bereich der Personenbeförderung durch eine Reihe von Vorschriften, speziell für die Flugzeug- und PKW-Industrie sowie bei Schiffen, Bahnen und im Bauwesen extreme Anforderungen an den Brandschutz gestellt. Dies dokumentiert sich in verschiedenen nationalen und internationalen Prüfvorschriften und Tests wie DIN 75200, DIN 4102, DV 899/35 (Deutschland), FAR 25.853, MVSS 25.853 (USA), AFNOR P 92- 507 (Frankreich) usw. Da zu erwarten ist, daß diese Vorschriften in Zukunft noch verschärft werden, wobei neben der Nichtbrennbarkeit besonderes Gewicht auf Rauchdichte und Giftigkeit des Rauchgases im Verschwelungs- und/oder Brandfall gelegt werden wird, hat das Airbus-Konsortium im Jahre 1979 bereits eine eigene verschärfte Vorschrift, die ATS 1000.001, erarbeitet und der interessierten Industrie zugänglich gemacht. Bei einer geschätzten Lebensdauer eines Flugzeugs von mindestens 15 Jahren trägt diese Vorschrift bereits zukünftigen technischen Entwicklungen und Anforderungen Rechnung (vgl. hierzu auch TÜ 21 (1980) Nr. 2 Februar, S. 79-82 und "Die chemische Produktion", 1983, Seiten 50-53).

Die zur Zeit in der Flugzeugindustrie eingesetzten Zweikomponenten- und Einkomponentenformmassen erfüllen die verschärften Anforderungen der ATS 1000.001 allerdings noch nicht.

In der Luftfahrtindustrie werden derartige Formmassen z.B. für die Herstellung von Versteifungen und Halterungen (Inserts), Innenverkleidungen (z.B. Seiten- und Trennwände sowie Deckenverkleidungen), Fußböden, Dämm- und Verkleidungsplatten sowie Formteilen eingesetzt. Besonders bevorzugt ist hierbei die Verwendung von sogenannten Prepreg-Bauteilen (Sandwich-Waben-Konstruktionen), bei denen es sich um mit mehrlagigen Harzmatten beschichtete Phenolharz-Waben (Handelsname Hexcel-Honeycomb und Nomex) handelt. Die Harzmatten (Prepregs) bestehen aus E-Glasgeweben, die mit Harzen auf Basis von Phenol/Formaldehyd, ungesättigten Polyestern, EPO und Polyimiden getränkt werden. Aus Gründen der Stabilitätsverbesserung sowie der Einsparung von Umleimern, d.h. Kantenbändern, wird häufig an den Rändern der Sandwich-Bauteile eine Randfüllmasse in die Waben gepreßt.

Eine auch den jetzt schon absehbaren zukünftigen Anforderungen genügende Formmasse müßte bei schwundfreier Aushärtung zu einem Konstruktionswerkstoff mit einer geringen Dichte von etwa 0,2 bis 0,8 g/cm$^3$ führen, der sowohl bei Raumtemperatur als auch unter Dauertemperatureinflüssen bis 80 °C bzw. 130 °C hohe Druck- und Biegefestigkeiten gewährleistet. Hinzu kommen die Anforderungen für den Brand- und/oder Verschwelungsfall, nämlich Nichtbrennbarkeit, kein Tropfen, unbedeutende Rauchgasentwicklung sowie eine weitgehende nichttoxische Pyrolysegasentwicklung. Für spezielle Einsatzzwecke (z.B. Brandschutzwände im Transportraum von Flugzeugen) wäre außerdem eine höhere Temperaturbeständigkeit erforderlich, d.h. der Werkstoff müßte z.B. 10 Minuten einer Temperaturbelastung von 1000 bis 1200 °C widerstehen. Schließlich ist angesichts der üblichen Verbundsysteme, in denen derartige Formmassen zum Einsatz kommen, eine optimale Verbindung oder Haftung mit den die Basis dieser Verbundsysteme bildenden Materialien wie Polymerisaten, Polykondensaten oder Polyadditionsverbindungen (z.B. ungesättigte Polyester, EPO-Harze, Phenolharze, Polyimid oder Polyurethan) unerläßlich. Eine optimale Verbindung oder Haftung ist außerdem auch auf Metallen und Materialien wie Glasfasern und Kohlefasern erforderlich oder zumindest erstrebenswert.

Die aus dem Stand der Technik bekannten Formulierungen und Systeme, die in zahlreichen Patentschriften bzw. Patentanmeldungen beschrieben werden, erfüllen jedoch nur einzelne der genannten Anforderungen oder Kombinationen von Teilbereichen dieser Anforderungen.

So werden in der europäischen Patentanmeldung 157 143 feuerhemmende Verschlußmassen beschrieben, die aus Melaminen und einer Reihe von Füllstoffen bestehen, aber abgesehen von anderen Unzulänglichkeiten Dichten von 0,7 bis 1,0 g/cm$^3$ aufweisen.

In der DE-OS 35 19 581 werden Ablations-Überzüge aus amingehärteten EPO- und Polysulfidharzgemischen mit Pre-ox-Kohlenstoffasern als Versteifung beschrieben, die zwar hochtemperaturbeständig sind, jedoch Dichten weit über 1,0 g/cm$^3$ aufweisen.

In der DE-OS 27 14 006, DE-OS 27 13 984 und DE-OS 27 40 504 werden Formmassen beschrieben, die aus Polyisocyanat und Hohlkugeln bestehen. Diese werden unter Zutritt von Luftfeuchtigkeit und gegebenenfalls nach Zusatz von Wasser ausgehärtet. Vorzugsweise werden kurz vor der Verarbeitung Phosphorsäure und/oder Phosphate bzw. deren wässrige Lösungen oder wässrige Alkalisilikatlösungen zugesetzt. Die in diesen Patentanmeldungen beschriebenen Formmassen weisen im ausgehärteten Zustand nur verhältnismäßig geringe Druckfestigkeiten auf.Nach dem Verfahren gemäß Anspruch 2 der DE-OS 27 14 006 hergestellte Massen (Platten mit einer Dicke von 5 bis 10 mm) hielten einer Temperaturbelastung von 1080 °C über einen Zeitraum von 1 Minute nicht stand.

Es bestand deshalb die Aufgabe, die oben dargelegten Mängel der bekannten Formmassen zu vermeiden bzw. Eigenschaftsverbesserungen insbesondere im Brandschutzbereich zu erzielen. Insbesondere bestand die Aufgabe, Formmassen zu schaffen, die neben den bereits oben genannten Eigenschaften im ausgehärteten Zustand hohe Druckfestigkeiten nicht nur bei Raumtemperatur sondern auch bei erhöhten Temperaturen bis 80 °C (Abnahme der Druckfestigkeit bei 80 °C gegenüber Raumtemperatur von weniger als 40%) liefern, höchste Anforderungen an die Brennbarkeit, Rauchgasdichte und Entwicklung von toxischen Pyrolysegasen im Verschwelungs- und/oder Brandfall erfüllen, nicht nachflammen, nicht tropfen, gegen Wasser, Hydraulikflüssigkeit und Kerosin beständig sind, eine ausgezeichnete Anbindung an jegliches gebräuchliches Prepreg-Material, Metalle und Fasermaterialien liefern und schwundfrei härten.

Zur Lösung dieser Aufgabe ist in der älteren europäischen Patentanmeldung 237 890 eine Einkomponenten-Formmasse auf Basis von Polyisocyanato-Isocyanuraten und Flamm- und Brandschutzmitteln sowie ggf. Polyisocyanaten, Füllstoffen und Beschleunigern vorgeschlagen worden, die gekennzeichnet ist durch:

A) 40 bis 80 Gew.% des Isocyanurats des 1,6-Hexamethylendiisocyanats mit einem NCO-Gehalt von 18 bis 24 Gew.%,

B) 0 bis 20 Gew.% Roh-MDI und/oder Präpolymer aus Polyol und Roh-MDI,

C) 5 bis 20 Gew.% einer Mischung aus:

- a) 80 bis 100 Gew.% sekundärem Ammoniumphosphat,
- b) 0 bis 20 Gew.% primärem Ammoniumphosphat,
- c) 0 bis 20 Gew.% Zeolith und/oder Alkalisilikat,
- d) 0 bis 20 Gew.% feinteiliger Kieselsäure,
- e) 0 bis 20 Gew.% $Ca_3(PO_4)_2$,

D) 0 bis 50 Gew.% Füllstoff und

E) 0 bis 5 Gew.% Beschleuniger.

Die Aushärtung dieser Formmasse erfolgt nach Kaltverformung durch Stampfen, Walzen, Pressen, Extrudieren, Einrütteln, Einblasen usw. bei Raumtemperatur oder erhöhten Temperaturen durch Einwirkung von Luftfeuchtigkeit bzw. Wasserdampf. Bei Raumtemperatur erfolgt die Härtung innerhalb von etwa 7 Tagen oder bei Zusatz der oben genannten Beschleuniger in Mengen von etwa 1 bis 3 Gew.% innerhalb von einem bis drei Tagen. Vorzugsweise erfolgt die Aushärtung jedoch bei 110 bis 200 °C (z.B. 130 °C) ohne Beschleuniger in etwa 0,5 bis 3 Stunden. Hierbei ergibt sich in der Regel eine nicht unerhebliche Nachhärtung, so daß die zunächst erzielten Druckfestigkeiten sich beispielsweise nach vier Wochen noch um etwa 20 bis 30% und sogar bis zu 50% erhöhen können. Selbstverständlich wird der Fachmann bei der Härtung dieser Formmasse die Formteilgeometrie und die Wärmeleitfähigkeit des Formteils berücksichtigen und die erforderliche Härtungszeit entsprechend wählen (vergl. hierzu z.B. DE-OS 27 14 006, Seite 23). Im übrigen erfolgt die Härtung bei den üblichen Drücken, z.B. Atmosphärendruck (üblich sind normalerweise Drücke von etwa 0,5 bis 50 bar).

Wenn die relative Luftfeuchtigkeit bei der Aushärtung geringer als etwa 40% ist, empfiehlt es sich, Wasser in Konzentrationen von 1 bis 10 Gew.% zuzusetzen, wobei die Wassermenge nicht definiert werden muß. Anstelle von Wasser können auch wässrige Laugen wie z.B. Natronlauge und Kalilauge oder alkalisch reagierende Verbindungen wie Natrium- und/oder Kaliumsilikate in Form ihrer wässrigen Lösungen zugesetzt werden. Gut geeignet sind auch Ammoniumphosphatlösungen. Gewöhnlich werden 0,5 bis 5 n Lösungen eingesetzt.

Wenngleich die Formmasse gemäß der älteren europäischen Patentanmeldung 237 890 die oben erläuterten Anforderungen in vollem Umfang erfüllt, hat sich herausgestellt, daß es in der Praxis häufig erwünscht ist, eine Formmasse zur Verfügung zu haben, die bei Raumtemperatur eingesetzt werden kann und danach eine schnelle bzw. schnellere Verarbeitung ohne Pressen und Autoklaven gestattet. Einerseits sind Härtungszeiten von etwa 7 Tagen oder bei Zusatz von Beschleunigern von etwa 1 Tag (siehe oben) häufig nicht akzeptabel und andererseits ist es oft nicht möglich oder zumindest unerwünscht, Temperaturen im oben genannten Bereich von etwa 110 bis 200 °C anzuwenden. Dies gilt insbesondere für Reparaturen und ganz besonders für vor Ort auszuführende Reparaturen, bei denen es andererseits wegen des geringens Einflusses des Reparaturwerkstoffes auf die Gesamteigenschaften des reparierten Teils (z.B. Raumgewicht) nicht im gleichen Maß auf die Einhaltung bzw. Erzielung aller der oben genannten optimalen Eigenschaften der Formmasse ankommt.

Der Erfindung liegt deshalb die Aufgabe zugrunde, eine Formmasse zu schaffen, die im wesentlichen die vorteilhaften Eigenschaften der Formmasse gemäß europäischer Patentanmeldung 237 890 aufweist, aber eine sehr viel schnelleren Verarbeitbarkeit bei Raumtemperatur oder leicht erhöhten Temperaturen von beispielsweise 60 bis 80 °C gestattet, wobei vorzugsweise auf Pressen und Autoklaven verzichtet werden kann.

Zur Lösung dieser Aufgabe wird eine Formmasse der eingangs genannten Art vorgeschlagen, die gekennzeichnet ist durch:

A) 5-40 Gew.% verzweigte Polyole mit einem OH-Gehalt von 2 bis 22 Gew.%,
B) 20 bis 40 Gew.% des Isocyanurats des 1,6- Hexamethylendiisocyanats,
C) 0 bis 20 Gew.% Roh-MDI, Präpolymer aus Polyol und Roh-MDI und/oder Isophorondiisocyanat (IPDI) gegebenenfalls in Kombination mit dimerisiertem Triazin des TDI, mischpolymerem Triazin von TDI und HDI und/oder Naphthalindiisocyanat (NDI),
D) 5 bis 20 Gew.% einer Mischung aus:
  a) 50 bis 100 Gew.% sekundärem Ammoniumphosphat,
  b) 0 bis 50 Gew.% primärem Ammoniumphosphat,
  c) 0 bis 30 Gew.% Azodicarbonamid,
  d) 0 bis 20 Gew.% Zeolith und/oder gemahlenem Alkalisilikat,
  e) 0 bis 10 Gew.% feinteiliger Kieselsäure,
  f) 0 bis 10 Gew.% Calciumorthophosphat und
  g) 0 bis 20 Gew.% calciniertem Calciumoxid,
E) 0 bis 50 Gew.% Füllstoff und
F) 0 bis 5 Gew.% Beschleuniger.

Als Komponente A dienen verzweigte Polyole mit einem OH-Gehalt von 2 bis 22 Gew.%, d.h. bifunktionelle oder mehrfunktionelle Polyole mit funktionellen oder nicht funktionellen Seitengruppen beziehungsweise -ketten. Polyole mit elastifizierenden Eigenschaften, z.B. lineare Polyetherole und Polyesterole, sind erfindungsgemäß nicht geeignet, weil die Druckfestigkeit dieser Formmassen bei höheren Temperaturen stark sinkt. Erfindungsgemäß geeignete verzweigte Polyole sind aus dem Stand der Technik in großem Umfang bekannt und in vielzähligen Variationen im Handel erhältlich (vgl. z.B. DE-OS 34 14 877, Seite 7, Zeile 25 bis Seite 9, Zeile 26, DE-OS 27 40 504, Seite 11, Zeile 16 bis Seite 16, Zeile 27 sowie die einschlägige Polyurethane betreffende Literatur, wobei die erfindungsgemäß geeigneten verzweigten Polyole häufig im Zusammenhang mit der sogenannten Präpolymertechnik beschrieben werden; hinsichtlich der Handelsprodukte vgl. z.B. die verschiedenen Firmenschriften der Bayer AG zu der Produktreihe "Desmophen"). Wegen der vollständigen oder zumindest weitgehenden Lösungsmittelfreiheit der erfindungsgemäßen Formmasse können allerdings nur solche Handelsprodukte Verwendung finden, die lösungsmittelfrei sind oder leicht von derartigen Bestandteilen befreit werden können.

Als besonders geeignet für die erfindungsgemäße Formmasse hat sich propoxyliertes Trimethylolpropan mit einem OH-Gehalt von etwa 11,5 Gew.% erwiesen. Weiterhin bevorzugt sind oligomere mehrfunktionelle Glykolether mit einem OH-Gehalt von etwa 22 Gew.%, oligomere bifunktionelle Polyesterole mit einem OH-Gehalt von etwa 2 bis 9 Gew.%, verzweigte Blockcopolymere aus diesen oligomeren bifunktionellen Polyesterolen mit dem zuvor genannten propoxylierten Trimethylolpropan oder den oligomeren mehrfunktionellen Glykolethern und schließlich fettsäure-modifizierte verzweigte oligomere Polyesterole mit einem OH-Gehalt von etwa 5 Gew.%. Diese bevorzugten Polyole sind alle im Handel erhältlich und können als Einzelkomponente oder in Form von beliebigen Mischungen verwendet werden (vgl. auch Becker-Braun, Kunststoffhandbuch a.a.O.). Besonders bevorzugt ist allerdings die alleinige Verwendung von propoxyliertem Trimethylolpropan.

Als Komponente B dient das Isocyanurat des 1,6-Hexamethylendiisocyanats. Im bevorzugten Fall des ideal trimerisierten 1,6-Hexamethylenisocyanurats handelt es sich um ein Polyisocyanat-Isocyanurat mit der

folgenden Formel:

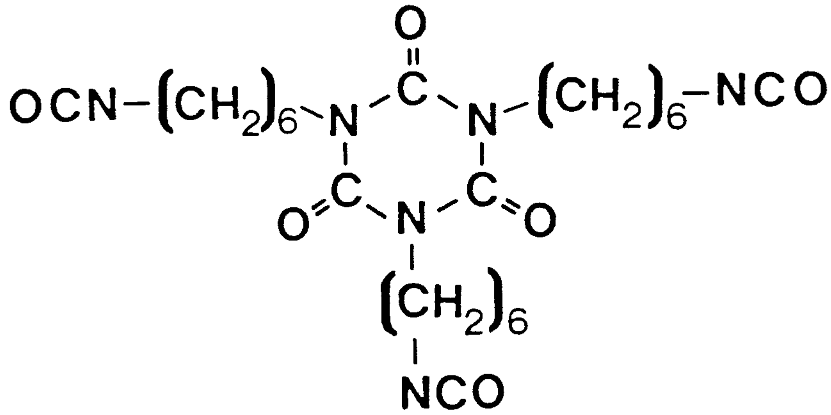

Geeignet sind selbstverständlich auch aus dieser Verbindung resultierende Vernetzungsprodukte. Das Isocyanurat des 1,6-Hexamethylendiisocyanats ist im Handel erhältlich und enthält normalerweise weniger als 0,5 Gew.% monomeres 1,6-Hexamethylendiisocyanat. Der NCO-Gehalt beträgt 18 bis 24 Gew.% und vorzugsweise 20 bis 22 Gew.%. Üblicherweise liegt die Dichte bei etwa 1,2 g/cm$^3$, und die Viskosität beträgt geeigneterweise etwa 1000 bis 3000 mPas, wobei die Einhaltung einer geeigneten Viskosität (nicht nur dieser Komponente) selbstverständlich für die Verarbeitbarkeit von Bedeutung ist. Der Gehalt an dem bevorzugten ideal trimerisierten 1,6-Hexamethylendiisocyanat ist bei den verschiedenen Handelsprodukten unterschiedlich und kann z.B. 98% und mehr betragen.

Bei "Roh-MDI" (Komponente C) handelt es sich um Polyisocyanate auf Diphenylmethandiisocyanat-Basis, wie sie durch Anilin-Formaldehyd-Kondensation und anschließende Phosgenierung hergestellt werden. Dabei werden flüchtige Anteile und ein Teil des gebildeten Diphenylmethandiisocyanats abdestilliert. Roh-MDI stellt dementsprechend ein Polyisocyanat aus dem Sumpf der technischen Herstellung bzw. Destillation von Diphenylmethandiisocyanaten dar (vgl. z.B. DE-OS 27 14 006, Seiten 9, 18 und insbesondere 28, Kunststoffhandbuch, Band 7, Polyurethane, 2. Auflage, 1983, Seite 63). Erfindungsgemäß ist es vorteilhaft, wenn das Roh-MDI eine hohe Funktionalität besitzt, d.h. der NCO-Gehalt des Roh-MDI beträgt vorteilhafterweise 28 bis 33 Gew.%, wenngleich auch Materialien mit einem niedrigeren NCO-Gehalt wie z.B. 20 Gew.% brauchbar sind. Die Dichte (20 °C) von Roh-MDI beträgt üblicherweise 1,2 ± 0,1 g/cm$^3$, während die Viskosität gewöhnlich bei etwa 130 mPas liegt.

Anstelle von Roh-MDI kann als Komponente C erfindungsgemäß auch ein Präpolymer eingesetzt werden, das durch Umsetzung von Roh-MDI mit Polyol in bekannter Weise erhältlich ist. Für die Herstellung von Präpolymeren geeignete Polyole sind dem Fachmann bekannt und bedürfen deshalb keiner weiteren Erläuterung (vgl. z.B. DE-OS 27 14 006, Seite 10 ff.).

Anstelle von Roh-MDI bzw. Präpolymer aus Polyol und Roh-MDI oder in Kombination mit Roh-MDI bzw. Präpolymer aus Polyol und Roh-MDI kann erfindungsgemäß in Komponente C auch Isophorondiisocyanat (IPDI) eingesetzt werden. Auch dieses Produkt ist im Handel erhältlich.

In einer weiteren Ausführungsform kann in der Komponente C das Roh-MDI und/oder Isophorondiisocyanat mit dimerisiertem Triazin des TDI, mischpolymerem Triazin von TDI und HDI und/oder Naphthalindiisocyanat (NDI) kombiniert werden, wobei diese zusätzlichen Bestandteile als Feststoffe eingesetzt werden. Trimerisiertes Triazin des TDI ist im Handel beispielsweise gelöst in Ethyl-oder Butylacetat erhältlich und besitzt folgende idealisierte Struktur:

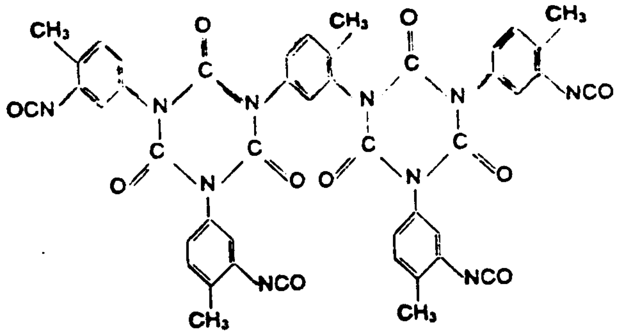

Mischpolymeres Triazin von TDI und HDI ist ebenfalls im Handel gelöst in Ethyl- oder Butylacetat erhältlich, und besitzt die folgende idealisierte Struktur:

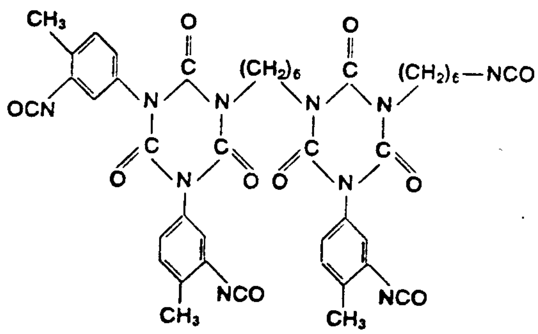

Vorzugsweise liegt die Komponente C in der erfindungsgemäßen Formmasse in einer Menge von 1 bis 10 Gew.% und insbesondere 2 bis 6 Gew.% vor, da dies zu optimalen Druckfestigkeiten der ausgehärteten Formmasse führt.

Die Komponente D ist maßgeblich für die äußerst vorteilhaften Eigenschaften der ausgehärteten erfindungsgemäßen Formmasse hinsichtlich Nichtbrennbarkeit verantwortlich. Das sekundäre Ammoniumphosphat (Diammoniumhydrogenphosphat, $(NH_4)_2HPO_4$) kann sowohl allein als auch in Kombination mit primärem Ammoniumphosphat (Ammoniumdihydrogenphosphat, $NH_4H_2PO_4$), Azodicarbonamid, Zeolith, insbesondere Natrium- oder Kaliumalumosilikaten, gemahlenen Alkalisilikaten wie Na- und K-Silikat, feinteiliger Kieselsäure, insbesondere pyrogener Kieselsäure, Calciumorthophosphat ($Ca_3(PO_4)_2$) und/oder calciniertem Calciumoxid verwendet werden. Die Mischung besteht dabei aus mindestens 50 Gew.% sekundärem Ammoniumphosphat sowie bis zu 50 Gew.% der übrigen Komponenten. Nach den bisherigen Erfahrungen hat sich insbesondere eine Mischung aus sekundärem Ammoniumphosphat, kristallinem Alkalisilikat, pyrogener Kieselsäure und Calciumorthophosphat als besonders brauchbar erwiesen.

Für die Lagerstabilität der erfindungsgemäßen Formmasse bzw. deren Komponente II ist ausschlaggebend, daß der Wassergehalt der Einzelbestandteile der Formmasse insgesamt nicht mehr als etwa 0,2 Gew.%, bezogen auf das Gewicht der Formmasse, beträgt und die Komponente D aus Teilchen mit einer Größe im Bereich von 0,5 bis 150 µm besteht. Bevorzugt ist eine solche Teilchengrößeverteilung, daß 70 bis 90 Gew.% eine Größe von 5 bis 100 µm besitzen und nicht mehr als 5 Gew.% größer als 100 µm und nicht weniger als 5 Gew.% kleiner als 5 µm sind. Diese Teilchengrößeverteilung gilt für die Komponente D insgesamt, vorzugsweise aber auch für jeden ihrer Mischungsbestandteile a) bis g). Sofern die in Komponente D eingesetzten Materialien nicht bereits im Handel mit der gewünschten Teilengröße erhältlich sind, kann die Teilchengrößeeinstellung in herkömmlicher Weise, z.B. durch Vermahlung erfolgen.

Der feinteiligen Kieselsäure oder dem Calciumorthophosphat in der Komponente D kommt im wesentlichen eine stabilisierende Wirkung zu, so daß Komponente D bei der Herstellung der erfindungsgemäßen Formmasse in Form einer rieselfähigen Vormischung eingesetzt werden kann. Unter diesem Gesichtspunkt geeignete Mengen dieser Bestandteile betragen etwa 1 bis 3 Gew.%, wobei darauf hingewiesen wird, daß sich die Gew.%-angaben zu den Mischungsbestandteilen der Komponente D sowohl in den Ansprüchen als auch der Beschreibung nur auf die Komponente D beziehen, d.h. die gesamte Komponente D entspricht 100 Gew.%.

Als für Komponente E geeignete Füllstoffe kommen praktisch alle aus dem Stand der Technik für derartige Formmassen bekannten Füllstoffe in Abhängigkeit von der vorgesehenen Verwendung der erfindungsgemäßen Formmasse in Frage. Beispiele für derartige Füllstoffe sind Talkum, Gesteinsmehl, Kreide, nichtbrennbare Kunststoffgranulate, anorganische Feststoffe wie CaO, Mg $(OH)_2$, Al $(OH)_3$, Metallflocken, -späne und pulver, Zeolithe, Farbpigmente usw.

Aufgrund der mit diesen erhaltenen guten Ergebnisse sei insbesondere auf Flugasche und Mikrohohlkugeln aus Glas oder Phenolharzen hingewiesen, welche eine Teilchengröße von 5 bis 200 µm und eine wahre Dichte von 0,15 bis 0,7 g/cm$^3$ aufweisen. Geeignet sind die üblichen Handelsprodukte, die dem Fachmann geläufig sind und dementsprechend keiner näheren Erläuterung bedürfen (bezüglich Mikrohohlglaskugeln siehe z.B. Kunststoffe 75 (1985) 7, Seiten 421 bis 424). Dabei ist es unter dem Gesichtspunkt des Brandschutzes besonders bevorzugt, solche Hohlkugeln in der erfindungsgemäßen Formmasse zu verwenden, die mit nicht brennbaren oder brandlöschenden Gasen gefüllt sind. Hierbei handelt es sich in der Regel um Stickstoff und Kohlendioxid, aber es gibt auch mit Edelgasen wie Argon gefüllte Hohlkugeln, die allerdings unter wirtschaftlichen Gesichtspunkten kaum in Frage kommen.

Sehr gut geeignete Füllstoffe sind auch Kohlenstoff-, Glas- und Metallfasern. Die Verwendung von Kohlenstofffasern ist insbesondere dann von Vorteil, wenn bei geringer Dichte der ausgehärteten Formmasse eine hohe Druckfestigkeit erforderlich. Besonders geeignet sind Kohlenstoffasern und sogenannte Preox-fasern, die aus Polyacrylnitril hergestellt werden (vgl. z.B. DE-OS 35 19 581, Seite 6 und 7), mit einer Dicke von 0,001 bis 0,1 mm und Schnittlängen von 0,005 bis 50 mm und insbesondere 0,1 bis 5 mm. Als Metallfasern kommen hauptsächlich Fasern aus Kupfer und rostfreiem Stahl infrage, wobei letztere vorzugsweise einen Durchmesser von 4 bis 12 µm und eine Schnittlänge von 1 bis 12 mm besitzen.

Gut geeignete Füllstoffe sind ferner Silicumdioxid oder $B_4C$ (tetraborcarbid) mit Körnungen von 1 bis 70 µm.

Sehr gut geeignet als Füllstoff sind auch Aluminiumflocken. Ferner haben sich sogenannte "cobweb-whiskers" als äußerst wertvolle Füllstoffe erwiesen. Es handelt sich hierbei um Fasermaterialien auf Basis von $SiO_2$, Si, SiC und C, die aus miteinander verflochtetenen Einzelfasern im Submikron- und Mikronbereich bestehen. Alternativ können die "cobweb-whiskers" auch aus Siliciumcarbidfasern im Gemisch mit Siliciumcarbidpartikeln bestehen (vgl. z.B. die Firmenschriften der Firma Norwegian Talc Deutschland GmbH betreffend die Faser-Additive "XEVEX" und "XPW 2").

Als gut geeignete Füllstoffe haben sich außerdem Melaminharzpulver erwiesen, die im Handel erhältlich sind. Das gleiche gilt für geschäumte Tone, die beispielsweise unter der Bezeichnung NORPRIL im Handel sind (vgl. das Datenblatt der Firma Norwegian Talc Deutschland GmbH vom Septemter 1986).

Erfindungsgemäße Formmassen, die keine Komponente E, also keinen Füllstoff enthalten, eignen sich als nichtbrennbares Laminatharz für Prepreg-Bauteile. Geringe Füllstoffgehalte sind von Vorteil, wenn die erfindungsgemäßen Formmassen zu Schäumen verarbeitet werden sollen. Besonders hat sich hier die Verwendung von Mikrohohlglaskugeln in einer Menge von etwa 5 bis 20 Gew.% bewährt. Die Mikrohohlglaskugeln dienen in diesem Zusammenhang auch zur Porenregulierung des herzustellenden Schaums. Vorzugsweise beträgt die Dichte der Mikrohohlglaskugeln in der erfindungsgemäßen Formmasse weniger als 0,4 g/cm$^3$.

Wie bereits oben erwähnt, richtet sich die Auswahl des jeweiligen Füllstoffs nach der vorgesehenen Anwendung der erfindungsgemäßen Formmasse. Dabei ist es dem Fachmann weitestgehend geläufig, in welcher Weise und in welchem Ausmaß er die Eigenschaften der Formmasse durch Auswahl von Füllstoffen beeinflussen kann (vgl. hierzu auch die weiter unten folgenden Beispiele). Es wurde allerdings gefunden, daß mit der erfindungsgemäßen Formmasse die grundsätzlich erwarteten Effekte häufig in einer überraschend ausgeprägten Form und einem überdurchschnittlichen Ausmaß eintreten.

Als Beschleuniger bzw. Katalysator (Komponente F) können alle hierfür bekannten Materialien wie Amine, Dibutylzinndilaurat, Zinnmercaptat usw. verwendet werden (vgl. z.B. DE-OS 27 14 006, Seiten 20 und 21 und DE-PS 23 10 559, Spalte 7), wobei tertiäre Amine bevorzugt sind.

Die Herstellung der erfindungsgemäßen Formmasse bietet für den Fachmann keine Besonderheiten und erfolgt durch Zusammengeben und herkömmliches Vermischen der Komponenten A, B und D sowie der Komponenten C, E und F, soweit letztere vorhanden sind. Wesentlich ist, daß Feuchtigkeit weitgehend ausgeschlossen ist. Vorzugsweise erfolgt dementsprechend die Herstellung der erfindungsgemäßen Formmasse in einer Atmosphäre eines getrockneten Schutzgases wie Stickstoff. Ferner ist es in der Regel erforderlich, bei Verwendung von Mikrohohlkugeln diese zunächst zu trocknen, beispielsweise vier Stunden bei 200 °C. Wie bereits oben erwähnt, ist es für eine ausreichende Lagerstabilität wesentlich, daß der Wassergehalt der Einzelbestandteile der erfindungsgemäßen Formmasse insgesamt nicht mehr als etwa 0,2 Gew.% beträgt.

Die Reihenfolge in der die Bestandteile der erfindungsgemäßen Formmasse zusammengegeben werden, ist normalerweise ohne Bedeutung. Bei Herstellung einer Einkomponenten-Formmasse (siehe unten wegen Haltbarkeit) ist es allerdings bevorzugt, das verzweigte Polyol am Schluß zuzusetzen. Außerdem hat es sich bei Verwendung von Mikrohohlglaskugeln als Füllstoff besonders bewährt, wenn man zunächst die Mikrohohlglaskugeln vorlegt und dann die Komponente B und/oder C in beliebiger Reihenfolge und dann die weiteren Bestandteile zusetzt. Ferner ist es bevorzugt, die Komponenten C und D, wie für die Komponente D bereits oben erwähnt, in denjenigen Fällen vorzufertigen, in denen es sich bei diesen Komponenten um Mischungen mehrerer Bestandteile handelt.

Das Vermischen der die erfindungsgemäße Formmasse bildenden Bestandteile kann in hierfür üblichen Vorrichtungen durchgeführt werden. Geeignet sind beispielsweise Zwangskneter, Doppel-Z-Zwangskneter, Planetenmischwerke, geeignete Extruder, Trommelmischer, Nautamischer. Das Kneten wird so lange fortgesetzt, bis eine homogene Masse erhalten wird, was durch Prüfung auf einer Glasscheibe unter dem Mikroskop feststellbar ist. In der Regel sind Knetzeiten von 3 Min. völlig ausreichend. Bei einem 200 l Ansatz beträgt die max. Knetdauer gewöhnlich nicht mehr als 15 Min., wobei in Abhängigkeit von den eingesetzten Materialien aber in der überwiegenden Zahl der Fälle sehr viel kürzere Knetzeiten ausreichen.

Die so hergestellte homogene Formmasse weist bei Abwesenheit von Komponente F eine Verarbeitungszeit (Topfzeit) von 8 bis 12 Stunden auf. Da dies für die Praxis häufig ein zu kurzer Zeitraum ist, wird die erfindungsgemäße Formmasse vorteilhafterweise unmittelbar nach ihrer Herstellung stark abgekühlt und dadurch eingefroren. Dies geschieht durch Schockfrieren auf tiefe Temperaturen. Als geeignet haben sich Temperaturen um - 18 bzw. -30 °C erwiesen, die zu einer Haltbarkeit der erfindungsgemäßen Formmasse von etwa 1 Monat führen. Nach dem Auftauen auf Raumtemperaturen beträgt die Verarbeitungszeit dann etwa 1 Std.

Die Lager- und Verarbeitungsfähigkeit der erfindungsgemäßen Formmasse kann dadurch erheblich verlängert werden, daß man sie als Zweikomponenten-Formmasse herstellt, wobei die Komponente I die Komponente A und die Komponente II die Komponente B und, soweit vorhanden, C enthält.

Insbesondere weisen die Komponenten I und II folgende Zusammensetzung auf:

Komponente I:

1) 40 bis 80 Gew.% Komponente A,
2) 10 bis 20 Gew.% Komponente D
3) 0 bis 50 Gew.% Komponente E und
4) 0 bis 5 Gew.% Komponente F

und

Komponente II

1) 40 bis 80 Gew.% Komponente B,
2) 0 bis 20 Gew.% Komponente C,
3) 5 bis 20 Gew.% Komponente D,
4) 0 bis 50 Gew.% Komponente E und
5) 0 bis 5 Gew.% Komponente F,

wobei sich die Gewichtsprozentangaben jeweils auf die Gesamtmenge der Komponente I oder II beziehen.

Die so hergestellten homogenen Komponenten I und II werden mit Hilfe üblicher Vorrichtungen (z.B. Pressen) in herkömmlicher Weise abgefüllt, z.B. in Kartuschen oder Gebinden. Die Abfüllung kann auch in Behälter aus Alu-Verbundfolie sowie Polyethylen oder Polypropylen erfolgen, wobei Polypropylen gegenüber Polyethylen wegen der geringeren Wasserdampfdurchlässigkeit bevorzugt ist.

Die erfindungsgemäße Formmasse bzw. deren Komponenten I und II sind, sofern sie nicht aus praktischen oder ästhetischen Gründen gefärbt sind, farblose bis weiße, niedrigviskose, spachtelförmige bis flüssige Massen. Wenn die erfindungsgemäße Formmasse als Zweikomponenten-Formmasse vorliegt, werden die Komponente I und die Komponente II vor der Verarbeitung möglichst homogen miteinander vermischt, was wiederum unter Verwendung herkömmlicher Vorrichtungen geschieht. Dabei ist es erwünscht, daß die Mischung der Komponenten I und II eine niedrigviskose spachtelförmige Masse ist, d.h. sie soll nicht fließfähig sein, sondern stehen. Dabei bleibt sie allerdings kaltverformbar und ihre Viskosität ist immer noch so ausreichend, daß sie noch in kleinste Waben (z.B. Schlüsselweite 2,8 mm) einpreßbar ist. Das Mischungsverhältnis der Komponenten I und II liegt gewöhnlich im Bereich von 3:1 bis 1:10.

Der besondere Vorteil der erfindungsgemäßen Formmasse, insbesondere als Zweikomponenten-Formmasse, gegenüber der Einkomponenten-Formmasse gemäß der älteren europäischen Patentanmeldung 237

890 ist die schnellere Aushärtung bei Raumtemperatur oder Temperaturen bis 80°C. So wird bei Temperaturen von 60 bis 80°C gewöhnlich eine Aushärtung innerhalb von 15 Min. oder weniger erreicht. Bei diesen Temperaturen betragen die Aushärtungszeiten der genannten Einkomponenten-Formmasse 6 Std. und mehr.

Aufgrund der schnellen Aushärtung, die auch ohne Einsatz von Pressen oder Autoklaven eintritt, ist die erfindungsgemäßen Formmasse nicht nur als Konstruktionswerkstoff und insbesondere Brandschutzkonstruktionswerkstoff, der vorteilhafterweise zur Herstellung und Beschichtung von Formteilen und Plattenelementen für den Bau von Land-, Luft-, und Wasserfahrzeugen verwendet wird, sondern auch ganz besonders als Reparaturwerkstoff und insbesondere Brandschutzreparaturwerkstoff geeignet, mit dem die zuvor genannten Formteile und Plattenelemente repariert werden können. Dadurch ist es erstmals möglich, beschädigte Bauteile so zu reparieren, daß sie den internationalen Prüfvorschriften wie FAR 25.853 und ATS 1000.001 gerecht werden.

Reparaturmethoden mit Spachtelmasse und Waben- bzw. Prepreg-Ersatz sind bekannt. Jedoch muß bei Phenol- oder Epoxydharz-Prepregs das Bauteil aus dem Flugzeug ausgebaut und in der Werft aufwendig in der Presse bei hohem Druck und Temperaturen von 120 bis 170°C repariert werden. Bei einer anderen Methode wird die Reparatur mit Schmelzkleber beschichteten, steifen bzw. vorgehärteten Prepregpads durchgeführt, die bei 70 bis 80°C aufgebügelt werden. Bei dieser Verfahrensweise wird aber nicht eine so große Stabilität wie bei Verwendung der erfindungsgemäßen Formmasse erreicht. Außerdem ist diese Methode nur beschränkt anwendbar bei gebogenen oder beliebig geformten Bauteilen. Schließlich ist ein Arbeiten bei Raumtemperatur oder Temperaturen bis 60°C ebenfalls nicht möglich. Ferner führen Überschreitungen der Aufbügeltemperatur zu Haftungsproblemen.

Demgegenüber kann man mit der erfindunsgemäßen Formmasse allein (ohne Prepregpads) oder mit Polyvinylfluorid Folienpads (Tedlar-Folie) oder dergleichen abgedeckt, mit oder ohne Wärmezuführung (Raumtemperatur bis 60°C), stabile und optisch einwandfreie Reparaturen erzielen.

Ferner lassen sich mit der erfindungsgemäßen Formmasse Bauteile im OMC-Verfahren (open mould compound) herstellen, bei dem eine offene Form lackiert und der Lack ausgehärtet wird. In dieser Form härtet man die Formmasse aus (Raumtemperatur bis 80°C) und erhält ein zum Endverbrauch fertiges Bauteil, d.h. es ist keine weitere Nachbearbeitung erforderlich. Durch diese Verfahrensweise wird eine Nichtbrennbarkeit für Lackschichten bis 200 µm Dicke erreicht, die den Prüfvorschriften FAR 25.853 und ATS 1000.001 genügt.

Ein weiterer für den Fachmann offensichtlicher Vorteil der erfindungsgemäßen Formmasse besteht darin, daß sie lösungsmittelfrei ist. Dadurch vereinfacht sich die Verarbeitung der erfindungsgemäßen Formmasse ganz erheblich, da insbesondere angesichts der immer strenger werdenden Umweltschutzvorschriften lösungsmittelhaltige Formmassen einen erheblichen zusätzlichen Aufwand und damit verbundene Kosten erforderlich machen.

Selbstverständlich wird der Fachmann bei der Härtung der erfindungsgemäßen Formmasse die Formteilgeometrie und die Wärmeleitfähigkeit des Formteils berücksichtigen und die erforderlichen Härtungszeit entsprechend wählen. Im übrigen kann die Härtung bei den üblichen Drücken, z.B. Atmosphärendruck (üblich sind normalerweise Drücke von etwa 0,5 bis 50 bar) erfolgen.

Wie sich bereits aus den obigen Ausführungen ergibt, sind die Anwendungs- und Einsatzmöglichkeiten der erfindungsgemäßen Formmasse äußerst vielfältig, d.h. sie eignet sich als Konstruktionswerkstoff und insbesondere als Brandschutzkonstruktionswerkstoff für die verschiedensten Zwecke (eine ganze Reihe von auch für die erfindungsgemäße Formmasse möglichen Anwendungen sind beispielsweise in der DE-OS 27 14 006 in dem die Seiten 25 und 26 verbindenden Absatz aufgeführt). So kann die erfindungsgemäße Formmasse zur herstellung von Schäumen (Hartschäume mit Raumgewichten zwischen 150 und 300 kg/m$^3$) dienen. Ein besonders wichtiges Anwendungsgebiet ist die Herstellung von Verbundsystemen oder Sandwich-Konstruktionen, die aus Oberflächen aus Glasgewebe- oder Kohlenstoffasernprepreg und Kernen aus Formmassen oder Schäumen mit Raumgewichten von 150 bis 1000 kg/m$^3$ bestehen. In diesem Zusammenhang ist besonders auf die Verarbeitung der erfindungsgemäßen Formmasse in Verbindung mit den insbesondere im Flugzeugbau verwendeten Wabenmaterialien hinzuweisen. Die erfindungsgemäße Formmasse kann in diese Wabenmaterialien eingepreßt und dann darin ausgehärtet werden, was zu Formteilen großer Härte, Druckfestigkeit und ausgezeichneter Brandschutzeigenschaften führt.

Für viele Anwendungszwecke empfiehlt es sich, die erfindungsgemäße Formmasse mit Glas- oder Kohlenstoff-Fasergeweben zu kombinieren. Hierfür eignen sich beispielsweise Satin-, Leinwand-, Atlas-, Roving-, Unidirektional-Gelege und -Stapelfasergewebe. Ferner können Vliese und Schlauchgeflechte verwendet werden. Als Gewebematerial eignen sich auch Aramid-Glasfasern oder Poly(p-phenylenterephthalamid)-Kohlenstoff-Fasergewebe (zu Aramid und PPDT vgl.z.B. Neue polymere Werkstoffe, 1969-1974, Carl Hanser Verlag 1975, Kapitel 9.1 und 9.2). Je nach Anwendungszweck kann man derartige Gewebe,

Vliese oder Geflechte mit der erfindungsgemäßen Formmasse füllen und dann aushärten oder man kann diese Gewebe, Vliese und Geflechte außen auf die Formmasse aufbringen und diese dann aushärten. Letzeres kann beispielsweise in der Weise erfolgen, daß man ein Formwerkzeug mit einem der genannten Gewebe, Vliese oder Geflechte auslegt und dann die erfindungsgemäße Formmasse einbringt und aushärtet. Auf diese Weise wird ein äußerst stabiler Verbund zwischen der ausgehärteten Formmasse und dem Gewebe, Vlies oder Geflecht gebildet. Die eingesetzten Gewebe und Vliese besitzen vorzugsweise Gewichte zwischen 50 bis 600 g/m$^2$ und vorwiegend zwischen 100 und 200 g/m$^2$.

Die aus der erfindungsgemäßen Formmasse hergestellten Produkte besitzen ausgezeichnete Nichtbrennbarkeitseigenschaften, z.B. halten Platten mit einer Dicke von 10 mm ohne Verstärkung einem Brandtest in Form einer 5-minütigen Beflammung mit einem Kerosinbrenner (1080 °C) soweit stand, daß ein Tropfen, Nachflammen oder Durchbrennen nicht beobachtet wird.

Selbstverständlich eignet sich die erfindungsgemäße Formmasse auch ganz grundsätzlich als Füllmasse und Spachtel sowie als Beschichtungsmaterial. Im Vordergrund steht allerdings die Verwendung in Verbundkonstruktionen aus Geweben und Massen. Ohne in Einzelheiten zu gehen, seien hier die wesentlichsten Anwendungsmöglichkeiten stichpunktartig aufgezählt:
Versteifung von Prepreg-Waben-Sandwich-Bauteilen für Platten und Bauteile in der Flugzeugindustrie, Schiffen, Bahnen und anderen Fahrzeugen (z.B. Rennwagen und Tanklastzügen), wo Brandschutz erforderlich ist. Für die PKW-Industrie: Motorabkapselungen, Auskleidung von Motorhauben gegen Vergaserbrände oder ähnliche Vorkommnisse.

Bauindustrie: Feuerhemmende Verschlüsse von Mauerdurchbrüchen, Verschlüsse von Kabelschächten, Klimaanlagenschächte, Deckenplatten, Brandschutzwände, Füllungen für Brandschutztüren oder in stärkerer Ausführung von 30 bis 50 mm als Türen;
Verkleidungen von Datenschutzschränken und Panzerschränken.

Die mit der erfindungsgemäßen Formmasse nach deren Aushärtung erhaltenen Produkte können gesägt, gefräst, gebohrt, genagelt, geschraubt, geklebt und in jeder beliebigen anderen Weise mechanisch bearbeitet werden (vergl. wiederum DE-OS 27 14 006, unterer Absatz auf Seite 26, wo Bearbeitungsbeispiele angegeben sind, die auch auf die erfindungsgemäße Formmasse zutreffen).

Es bedarf keiner ausdrücklichen Erwähnung, daß die erfindungsgemäße Formmasse selbstverständlich auch im Zusammenhang mit auf dem hier vorliegenden technischen Gebiet üblichen Hilfsmitteln verarbeitet werden kann, wobei diese in die Formmasse als solche einverleibt oder beispielsweise bei der Verarbeitung und Aushärtung zugegeben werden können. Derartige Hilfsmittel sind dem Fachmann geläufig, so daß auf Erläuterungen hierzu verzichtet werden kann (vergl. z.B. DE-OS 27 14 006, Seiten 20 bis 22).

In diesem Zusammenhang ist darauf hinzuweisen, daß es sogar vorteilhaft sein kann, die erfindungsgemäße Formmasse mit Polykondensationsprodukten, wie Phenolharzen, bei denen eine Wasserabspaltung stattfindet, im Verbund auszuhärten. Interessant ist ferner, daß eine aushärtende Wirkung mit überschüssigen Monomeren (z.B. Styrol und Epoxydharze) der Laminate (Prepeg-Bauteile) erzielt wird. Die Wechselwirkung mit beispielsweise Styrol und/oder Epoxydharzen führt zu einer extrem starken Verbindung mit dem Laminat. Die zuvor genannten Eigenschaften der erfindungsgemäßen Formmasse stellen einen erheblichen Unterschied zu den bekannten Formmassen (beispielsweise DE-OS 27 14 006) und den auf dem Markt befindlichen Rand- und Kernfüllmassen auf Epoxidharzbasis sowie Formulierungen mit Phenolharzkomponenten (s. oben) dar, die entweder die ATS 1000.001 oder die erforderlichen Anbindungen von Prepregs an Polykondensationsprodukte wie Phenolharzmassen nicht erfüllen und außerdem nicht bei Raumtemperatur ausgehärtet werden können

Schließlich sei noch erwähnt, daß die erfindungsgemäße Formmasse nach Aushärtung eine sehr gute Anbindung, Haftfestigkeit und Verträglichkeit auf allen handelsüblichen Kunststoffen aufweist, sogar auf Polyolefinen, Teflon (PTFE) und ähnlichen läßt sich eine brauchbare Haftung erzielen. Auch auf Metall werden zufriedenstellende Haftfestigkeiten erzielt, so daß die erfindungsgemäße Füllmasse auch zum Aufbau von Sandwich-Bauteilen mit Metallaußenflächen und einem Kern aus Füllmasse verwendet werden oder als Beschichtungsmaterial auf Metallen als konstruktive Brandschutzhaut dienen können. Geeignete metallische Werkstoffe sind z.B. Stahl, Aluminium.

Im folgenden soll die Erfindung anhand von Beispielen näher erläutert werden. Sofern nichts anderes angegeben ist, sind die Mengen und -Prozentangaben in den folgenden Beispielen immer auf das Gewicht bezogen.

Beispiel 1

Es wurde eine Einkomponenten-Formmasse aus den Komponenten A, B, C, D und E hergestellt. Dazu wurden 50 g handelsübliches Isocyanurat des 1,6-Hexamethylendiisocyanats mit einem NCO-Gehalt von

21,5% (im folgenden durchgehend in allen Beispielen nur als Isocyanurat bezeichnet), 5 g Roh-MDI mit einem NCO-Gehalt von 31%, 12 g sekundäres Ammoniumphosphat, 1 g Zeolith, 1 g pyrogene Kieselsäure und 28 g Mikrohohlglaskugeln mit einer Dichte von 0,35 g/$cm^3$ homogen vermischt. In die so erhaltene Mischung wurden anschließend 50 g eines propoxylierten Trimethylolpropans mit einem OH-Gehalt von 11,5% homogen eingeknetet. Die so erhaltene Mischung besaß eine Verabeitungszeit von etwa 8 Stunden. Sie wurde in einer geschlossenen Form bei 80°C 30 Min. lang ausgehärtet. Das ausgehärtete Produkt besaß ein Raumgewicht von etwa 650 kg/$m^3$ und eine Druckfestigkeit bei Raumtemperatur von etwa 22 N/$mm^2$.

Beispiel 2

Es wurde eine Zweikomponenten-Formmasse unter Verwendung der gleichen Bestandteile wie in Beispiel 1 hergestellt. Die Komponente I wurde hergestellt aus 500 g propoxyliertem Trimethylolpropan, 30 g Mikroglashohlkugeln, 19 g sekundärem Ammoniumphosphat und 1 g Zeolith. Die Komponente II wurde hergestellt aus 500 g Isocyanurat, 50 g Roh-MDI, 101 g sekundärem Ammoniumphosphat, 9 g Zeolith, 10 g pyrogene Kieselsäure und 250 g Mikrohohlglaskugeln. Die Komponenten I und II wurden separat durch homogene Vermischung der genannten Bestandteile hergestellt. Auf diese Weise wurden zwei stabile Einzelkomponenten erhalten, wobei die Komponente II bei Raumtemperatur eine Haltbarkeit von 10 Tagen und bei -18°C eine Haltbarkeit von 90 Tagen aufwies. Nach dem Vermischen der beiden so hergestellten Einzelkomponenten besaß die erhaltene Mischung eine Verarbeitungszeit von etwa 8 Stunden. Die Aushärtung erfolgte wie in Beispiel 1 und das ausgehärtete Produkt besaß praktisch das gleiche Raumgewicht und die gleiche Druckfestigkeit wie in Beispiel 1 angegeben.

Beispiel 3

Beispiel 2 wurde wiederholt mit dem Unterschied, daß in Komponente I das propoxylierte Trimethylolpropan durch 500 g eines oligomeren mehrfunktionellen Glykolethers mit einem OH-Gehalt von 22 % ersetzt wurden. Nach dem Mischen der Komponenten I und II betrug die zur Verfügung stehende Verarbeitungszeit bei Raumtemperatur etwa 6 Stunden. Nach Aushärtung in der geschlossenen Form bei 80°C über einen Zeitraum vom 30 Min. wurde ein Formkörper mit einem Raumgewicht von etwa 630 kg/$m^3$ und einer Druckfestigkeit bei Raumtemperatur von etwa 19,5 N/$mm^2$ erhalten. Die Aushärtung der Mischung bei Raumtemperatur erforderte etwa 12 Stunden.

Beispiel 4

Es wurde wie in den Beispielen 2 und 3 verfahren, wobei jedoch als Polyol 500 g eines oligomeren difunktionellen Polyesterols mit einem OH-Gehalt von 2,0% eingesetzt wurden. Die Verarbeitungszeit der Mischung aus den Komponenten I und II betrug etwa 12 Stunden. Die Aushärtung erfolgte bei einer Temperatur von 80°C innerhalb von 60 Min., während die Aushärtungszeit bei Raumtemperatur etwa 36 Stunden betrug. Das ausgehärtete Produkt besaß ein Raumgewicht von etwa 655 kg/$m^3$ und eine Druckfestigkeit bei Raumtemperatur von etwa 14,2 N/$mm^2$.

Beispiel 5

Es wurde wie in den Beispielen 3 bis 4 verfahren mit dem Unterschied, daß als Polyol 500 g eines verzweigten Polyalkohols mit Ether- und Estergruppen mit einem OH-Gehalt von 5% eingesetzt wurde, bei dem es sich um ein Blockcopolymer gemäß der Definition d von Komponente A (s. Patentanspruch 5) handelt. Die Mischung der Komponenten I und II ergab eine Verarbeitungszeit von etwa 8 Stunden. Die Aushärtung konnte wiederum innerhalb von 60 Minuten bei 80°C oder in etwa 24 Stunden bei Raumtemperatur erfolgen. Das ausgehärtete Produkt besaß ein Raumgewicht von 600 kg/$m^3$ und eine Druckfestigkeit bei Raumtemperatur von etwa 14,8 N/$mm^2$.

Beispiel 6

Es wurde wie in den Beispielen 2 bis 5 verfahren mit dem Unterschied, daß als Polyol 500 g mit gesättigter niedermolekularer Fettsäure modifiziertes oligomeres Polyesterol mit einem OH-Gehalt von etwa 5 % verwendet wurde. Die Verarbeitungszeit der Mischung der Komponenten I und II betrug etwa 12 Stunden. Die Aushärtung konnte wiederum bei 80°C über einen Zeitraum vom 60 Min. oder bei Raumtemperatur über einem Zeitraum vom etwa 24 Stunden erfolgen. Das ausgehärtete Produkt besaß ein Raumgewicht von 580 $kg/m^3$ und eine Druckfestigkeit bei Raumtemperatur von ungefähr 17 $N/mm^2$.

Beispiel 7

Es wurde eine Zweikomponentenmasse hergestellt aus:

Komponente I:

60 g propoxyliertes Trimethylolpropan (OH-Gehalt = 11,5%)
10 g einer Mischung aus
50 % sek. Ammoniumphosphat,
5 % primärem Ammoniumphosphat, 20 % Azodicarbonamid,
5 % Kaliumsilikat,
10 % Calciumorthophosphat und
10 % CaO
10 g Kohlenstoffasern mit einer Schnittlänge von 400 µm
10 g Microhohlglaskugeln mit einer Dichte von 0,35 $g/cm^3$
2 g feinteilige Kieselsäure
0,5 g Dibutylzinndilaurat und

Komponente II:

150 g Isocyanurat
20 g einer Mischung aus 80% Roh-MDI,10% IPDI und 10% dimerisiertem Triazin des TDI
50 g einer Mischung aus 80% sek. Ammoniumphosphat, 15% Zeolith und 5% feinteiliger Kieselsäure
100 g Microhohlglaskugeln mit einer Dichte von 0,40 $g/cm^3$
10 g Kohlenstoffasern mit einer Schnittlänge von 100 µm
Die Mischung aus Roh-MDI, IPDI und dimerisiertem Triazin des TDI wurde so hergestellt, daß IPDI und dimerisiertes Triazin des TDI im Roh-MDI teils gelöst, teils fein suspendiert wurden.

Die Komponenten I und II wurden homogen gemischt und bei 40 °C in einer geschlossenen Form innerhalb von 2 Stunden ausgehärtet. Das ausgehärtete Produkt besaß ein Raumgewicht von 750 $kg/m^3$. Die Druckfestigkeit bei Raumtemperatur betrug nach 7 Tagen 38 $N/mm^2$ und nach 30 Tagen 52 $N/mm^2$. Bei 80 °C betrug die Druckfestigkeit nach 7 Tagen 12 $N/mm^2$ und nach 30 Tagen 10 $N/mm^2$.

Beispiel 8

Es wurde eine Zweikomponentenmasse hergestellt aus:

Komponente I:

10 g fettsäure modifiziertes, oligomeres Polyesterol mit einem OH-Gehalt von 5%
3 g primäres Ammoniumphosphat,
1 g Azodicarbonamid,
4 g geschäumter Ton (NORPRIL 250) mit einer Schüttdichte von 250 $kg/m^3$
1 g Microhohlglaskugeln mit einer Dichte von 0,35 $g/cm^3$
und

Komponente II:

60 g Isocyanurat
5 g einer Mischung aus 80% Roh-MDI, 10% NDI und 10% eines mischpolymeren Triazins von TDI und HDI,
1 g feinteilige Kieselsäure,
14 g sekundäres Ammoniumphosphat,
0,1 g Triethylamin
0,1 g Dibutylzinndilaurat
10 g cobweb-whiskers (XEVEX)

10 g Microhohlglaskugeln mit einer Dichte von 0,38 g/$cm^3$
Die Mischung aus Roh-MDI, NDI und mischpolymerem Triazin von TDI und HDI wurde wie in Beispiel 7 durch teilweises Suspendieren und Auflösen von NDI und mischpolymerem Triazin von TDI und HDI im Roh-MDI hergestellt.

Die Komponenten wurden seperat über eine Tandemanlage mit Schöpfkolbenpumpen bei etwa 80 bis 120 bar (Leitungsquerschnitt 30 mm) gefördert und im Mischungsverhältnis von Komponente I zu Komponente II von 3:1 über einen Statikmischer (Typ Kedix-Mischrohr) homogen vermischt. In einer geschlossenen Form wurde dann bei 60 °C eine Stunde lang ausgehärtet. Das ausgehärtete Produkt besaß ein Raumgewicht von 680 kg/$m^3$ und eine Druckfestigkeit bei Raumtemperatur von 32,0 N/$mm^2$ nach 14 Tagen.

Beispiel 9

Es wurde eine Zweikomponentenmasse hergestellt aus:

Komponente I:

80 g oligomerer mehrfunktioneller Glykolether mit einem OH-Gehalt von 22%
20 g sekundäres Ammoniumphosphat und

Komponente II:

32 g Isocyanurat
8 g sekundäres Ammoniumphosphat
Die Komponenten I und II wurden im Verhältnis 2:5 homogen vermischt und in einer geschlossenen Form 120 Min. lang bei 80 °C ausgehärtet. Das ausgehärtete Produkt besaß ein Raumgewicht von 1300 kg/$m^3$ und eine Druckfestigkeit bei Raumtemperaur von 40 N/$mm^2$ bzw. bei 80 °C von 6,5 N/$mm^2$.

Beispiel 10

Es wurden Zweikomponenten-Formmassen hergestellt gemäß Beispiel 2 mit dem Unterschied, daß unterschiedliche Mengen Beschleuniger hinzugefügt wurden:

a) Beispiel 2 + 0,2 g DBZDL
b) Beispiel 2 + 0,2 g DBZDL + 0,1 g TEA
c) Beispiel 2 + 0,8 g DBZDL

DBZDL = Dibutylzinndilaurat;
TEA = Triethylamin
Die Eigenschaften der Mischungen der Komponenten I und II und der erhaltenen ausgehärteten Produkte sind in der folgenden Tabelle zusammengefaßt.

| | a) | b) | c) |
|---|---|---|---|
| Raumgewicht (kg/$m^3$) | 680 | 640 | 610 |
| Verarbeitungszeit bei Raumtemperatur | 2 h | 20 min | 5 min |
| Druckfestigkeit bei Raumtemperatur nach 2 Tagen: (N/$mm^2$) | 18,0 | 19,2 | 34,5 |
| Bei Raumtemperatur nach 30 Tagen: (N/$mm^2$) | 22,8 | 25,4 | 36,8 |

## Patentansprüche

1. Formmasse gekennzeichnet durch:
   A) 5-40 Gew.% verzweigte Polyole mit einem OH-Gehalt von 2 bis 22 Gew.%,
   B) 20 bis 40 Gew.% des Isocyanurats des 1,6- Hexamethylendiisocyanats,
   C) 0 bis 20 Gew.% Roh-MDI, Präpolymer aus Polyol und Roh-MDI und/oder Isophorondiisocyanat (IPDI) gegebenenfalls in Kombination mit dimerisiertem Triazin des TDI, mischpolymerem Triazin von TDI und HDI und/oder Naphthalindiisocyanat (NDI),
   D) 5 bis 20 Gew.% einer Mischung aus:
      a) 50 bis 100 Gew.% sekundärem Ammoniumphosphat,
      b) 0 bis 50 Gew.% primärem Ammoniumphosphat,
      c) 0 bis 30 Gew.% Azodicarbonamid,
      d) 0 bis 20 Gew.% Zeolith und/oder gemahlenem Alkalisilikat,
      e) 0 bis 10 Gew.% feinteiliger Kieselsäure,
      f) 0 bis 10 Gew.% Calciumorthophosphat und
      g) 0 bis 20 Gew.% calciniertem Calciumoxid,
   E) 0 bis 50 Gew.% Füllstoff und
   F) 0 bis 5 Gew.% Beschleuniger.

2. Formmasse nach Anspruch 1, dadurch gekennzeichnet, daß sie als Zweikomponenten-Formmasse vorliegt, wobei die Komponente I die Komponente A und die Komponente II die Komponenten B und, soweit vorhanden, C enthält.

3. Formmasse nach Anspruch 2, dadurch gekennzeichnet, daß die Komponenten I und II folgende Zusammensetzung aufweisen:
   Komponente I:
      1) 40 bis 80 Gew.% Komponente A,
      2) 10 bis 20 Gew.% Komponente D
      3) 0 bis 50 Gew.% Komponente E und
      4) 0 bis 5 Gew.% Komponente F
   und
   Komponente II:
      1) 40 bis 80 Gew.% Komponente B,
      2) 0 bis 20 Gew.% Komponente C,
      3) 5 bis 20 Gew.% Komponente D,
      4) 0 bis 50 Gew.% Komponente E und
      5) 0 bis 5 Gew.% Komponente F,
   wobei sich die Gewichtsprozentangaben jeweils auf die Gesamtmenge der Komponente I oder II beziehen.

4. Formmasse nach Anspruch 2 oder 3, dadurch gekennzeichnet, daß das auf das Gewicht bezogene Mischungsverhältnis der Komponenten I und II im Bereich von 3:1 bis 1:10 liegt.

5. Formmasse nach einem der Ansprüche 1 bis 4, dadurch gekennzeichnet, daß die Polyol-Komponente A aus
   a) propoxyliertem Trimethylolpropan mit einem OH-Gehalt von etwa 11,5 Gew.%,
   b) oligomerem mehrfunktionellem Gylkolether mit einem OH-Gehalt von etwa 22 Gew.%,
   c) oligomeren bifunktionellen Polyesterolen mit einem OH-Gehalt von 2 bis 9 Gew.%,
   d) verzweigten Blockcopolymeren aus a) oder b) mit c) mit einem OH-Gehalt von etwa 5 Gew.%,
   e) fettsäure-modifizierten, oligomeren Polyesterolen mit einem OH-Gehalt von etwa 5 Gew.% oder
   f) beliebigen Mischungen von a), b), c), d) und e)
   besteht.

6. Formmasse nach einem der Ansprüche 1 bis 5, dadurch gekennzeichnet, daß die Komponente D aus Teilchen mit einer Größe im Bereich von 0,5 bis 150 µm besteht.

7. Formmasse nach Anspruch 6, dadurch gekennzeichnet, daß die Komponente D eine solche Teilchengrößeverteilung aufweist, daß 70 bis 90 Gew.% eine Größe von 5 bis 100 µm besitzen und nicht mehr

als 5 Gew.% größer als 100 µm und nicht weniger als 5 Gew.% kleiner als 5 µm sind.

**8.** Formmasse nach einem der Ansprüche 1 bis 7, dadurch gekennzeichnet, daß der Füllstoff der Komponente E ausgewählt ist aus Flugasche, Siliciumdioxid, $B_4C$, Mikrohohlkugeln aus Glas oder Phenolharzen, Kohlenstoffasern, Pre-ox-Fasern, Glasfasern, Metallfasern, Aluminiumflocken, cobweb-whiskers, Melaminharzpulver und/oder geschäumten Tonen.

**9.** Formmasse nach Anspruch 8, dadurch gekennzeichnet, daß die Kohlenstoff- oder Pre-ox-fasern eine Dicke von 0,001 bis 0,1 mm und Schnittlängen von 0,005 bis 50 mm und insbesondere 0,1 bis 5 mm aufweisen.

**10.** Verwendung der Formmasse gemäß einem der Ansprüche 1 bis 9 als Konstruktions- und Reparaturwerkstoff, insbesondere Brandschutzkonstruktions- oder -reparaturwerkstoff.

**11.** Verwendung nach Anspruch 10, dadurch gekennzeichnet, daß die Formmasse zur Herstellung von Formteilen und Plattenelementen für den Bau von Land-, Luft- und Wasserfahrzeugen sowie zur Reparatur derartiger Formteile und Plattenelemente verwendet wird.

## Claims

**1.** Moulding material characterized by:
A) 5 to 40 % by wt. branched polyols having an OH content of 2 to 22 % by wt.,
B) 20 to 40 % by wt. of the isocyanurate of 1,6-hexamethylene diisocyanate,
C) 0 to 20 % by wt. crude MDI, prepolymer of polyol and crude MDI and/or isophorone diisocyanate (IPDI) optionally in combination with dimerized triazine of TDI, copolymeric triazine of TDI and HDI and/or naphthalene diisocyanate (NDI),
D) 5 to 20 % by wt. of a mixture of
a) 50 to 100 % by wt. of secondary ammonium phosphate,
b) 0 to 50 % by wt. primary ammonium phosphate,
c) 0 to 30 % by wt. azodicarbonamide,
d) 0 to 20 % by wt. zeolite and/or ground alkali silicate,
e) 0 to 10 % by wt. finely divided silica,
f) 0 to 10 % by wt. calcium orthophosphate and
g) 0 to 20 % by wt. calcined calcium oxide,
E) 0 to 50 % by wt. filler and
F) 0 to 5 % by wt. accelerator.

**2.** Moulding material according to claim 1, characterized in that it exists as a two-component moulding material in which component I contains component A and component II contains component B and, if present, component C.

**3.** Moulding material according to claim 2, characterized in that components I and II have the following composition:
Component I:
1) 40 to 80 % by wt. component A,
2) 10 to 20 % by wt. component D,
3) 0 to 50 % by wt. component E and
4) 0 to 5 % by wt. component F
and
Component II:
1) 40 to 80 % by wt. component B,
2) 0 to 20 % by wt. component C,
3) 5 to 20 % by wt. component D,
4) 0 to 50 % by wt. component E and
5) 0 to 5 % by wt. component F,
the weight percentages referring in each case to the total amount of component I or II.

4. Moulding material according to claim 2 or 3, characterized in that the weight-related mixing ratio of components I and II is in the range from 3:1 to 1:10.

5. Moulding material according to one of claims 1 to 4, characterized in that the polyol component A consists of
   a) propoxylated trimethylol propane having an OH content of about 11.5 % by wt.,
   b) oligomeric multi-functional glycol ether having an OH content of about 22 % by wt.,
   c) oligomeric bifunctional polyesterols having an OH content of 2 to 9 % by wt.,
   d) branched block copolymers of a) or b) with c) having an OH content of about 5 % by wt.,
   e) fatty acid-modified, oligomeric polyesterols having an OH content of about 5 % by wt. or
   f) any mixtures of a), b), c), d) and e).

6. Moulding material according to one of claims 1 to 5, characterized in that component D consists of particles having a size in the range from 0.5 to 150 µm.

7. Moulding material according to claim 6, characterized in that component D has a particle size distribution such that 70 to 90 % by wt. have a size of 5 to 100 µm and not more than 5 % by wt. are larger than 100 µm and not less than 5 % by wt. are smaller than 5 µm.

8. Moulding material according to one of claims 1 to 7, characterized in that the filler of component E is selected from fly ash, silica, $B_4C$, hollow microspheres made of glass or phenolic resins, carbon fibres, pre-ox fibres, glass fibres, metal fibres, aluminium flakes, cobweb whiskers, melamine resin powder and/or foamed clays.

9. Moulding material according to claim 8, characterized in that the carbon or pre-ox fibres have a thickness of 0.001 to 0.1 mm and cut lengths of 0.005 to 50 mm and in particular 0.1 to 5 mm.

10. Use of the moulding material according to one of claims 1 to 9 as construction and repair material, in particular fire-protection construction or repair material.

11. Use according to claim 10, characterized in that the moulding material is used for the manufacture of moulded articles and plate elements for the construction of land, air and water vehicles and for the repair of such moulded articles and plate elements.

## Revendications

1. Masse moulée caractérisée par :
   A) 5-40% en poids de polyols ramifiés ayant une teneur en OH de 2 à 22% en poids,
   B) 20 à 40% en poids de l'isocyanurate du 1,6-hexaméthylènediisocyanate,
   C) 0 à 20% en poids du MDI brut, d'un prépolymère formé de polyol et de MDI brut et/ou de diisocyanate d'isophorone (IPDI) le cas échéant en association avec la triazine dimérisée de TDI, la triazine en polymère mélangé de TDI et HDI et/ou du diisocyanate de naphtalène (NDI),
   D) 5 à 20% en poids d'un mélange formé de :
      a) 50 à 100% en poids de phosphate d'ammonium secondaire,
      b) 0 à 50% en poids de phosphate d'ammonium primaire,
      c) 0 à 30% en poids d'azodicarbonamide,
      d) 0 à 20% en poids de zéolithe et/ou d'un silicate alcalin moulu,
      e) 0 à 10% en poids d'acide silicique à grain fin,
      f) 0 à 10% en poids d'orthophosphate de calcium et
      g) 0 à 20% en poids d'oxyde de calcium calciné,
   E) 0 à 50% en poids d'une charge et
   F) 0 à 5% en poids d'un accélérateur.

2. Masse moulée selon la revendication 1, caractérisée en ce qu'elle se présente sous la forme d'une masse moulée à deux composants, le composant I contenant le composant A et le composant II contenant les composants B et, s'il est présent C.

**3.** Masse moulée selon la revendication 2, caractérisée en ce que les composants I et II présentent la composition suivante :

Composant I :

1) 40 à 80% en poids du composant A,
2) 10 à 20% en poids du composant D
3) 0 à 50% en poids du composant E et
4) 0 à 5% en poids du composant F

et

Composant II :

1) 40 à 80% en poids du composant B,
2) 0 à 20% en poids du composant C,
3) 5 à 20% en poids du composant D,
4) 0 à 50% en poids du composant E et
5) 0 à 5% en poids du composant F,

les pourcentages pondéraux se rapportant à chaque fois à la quantité totale du composant I ou II.

**4.** Masse moulée selon la revendication 2 ou 3, caractérisée en ce que le rapport de mélange, rapporté au poids, des composants I et II, est compris entre 3:1 et 1:10.

**5.** Masse moulée selon l'une des revendications 1 à 4, caractérisée en ce que le polyol composant A se compose de

a) du triméthylolpropane propoxylé ayant une teneur en OH d'environ 11,5% en poids,
b) un glycoléther oligomère multifonctionnel ayant une teneur en OH d'environ 22% en poids,
c) des polyestérols oligomères bifonctionnels ayant une teneur en OH de 2 à 9% en poids,
d) des copolymères séquencés ramifiés formés de a) ou b) avec c) ayant une teneur en OH d'environ 5% en poids,
e) des polyestérols oligomères modifiés par un acide gras ayant une teneur en OH d'environ 5% en poids
f) des mélanges choisis de a), b), c), d) et e).

**6.** Masse moulée selon l'une des revendications 1 à 5, caractérisée en ce que le composant D se compose de particules d'une grandeur comprise entre 0,5 et 150 µm.

**7.** Masse moulée selon la revendication 6, caractérisée en ce que le composant D présente une distribution granulométrique telle que 70 à 90% en poids ont une grandeur de 5 à 100 µm et pas plus de 5% en poids sont plus grandes que 100 µm et pas moins que 5% en poids sont plus petites que 5 µm.

**8.** Masse moulée selon l'une des revendications 1 à 7, caractérisée en ce que la charge du composant E est choisie parmi des cendres volantes du bioxyde de silicium, $B_4C$, des microbilles creuses de verre ou de résines phénoliques, des fibres Pré-ox, des fibres de verre, des fibres métalliques, des flocons d'aluminium, des fils de toile d'araignée, de la poudre de résine mélamine et/ou des argiles en mousse.

**9.** Masse moulée selon la revendication 8, caractérisée en ce que les fibres de carbone ou Pré-ox présentent une épaisseur de 0,001 à 0,1 mm et une longueur de coupe de 0,005 à 50 mm et en particulier de 0,1 à 5 mm.

**10.** Utilisation de la masse moulée selon l'une des revendications 1 à 9, en tant que matériau de construction et de réparation, en particulier des construction de protection contre l'incendie et/ou des ateliers de réparation.

**11.** Utilisation selon la revendication 10, caractérisée en ce que la masse moulée est utilisée pour la fabrication de pièces moulées et d'éléments en plaques pour la construction de véhicules terrestres, aériens et aquatiques ainsi que pour la réparation de telles pièces moulées et éléments en plaques.